# FASCICULE DE BREVET EUROPEEN

(11) **EP 1 753 606 B1**
(45) Date de publication et mention de la délivrance du brevet: **16.04.2008**
(21) Numéro de dépôt: 05771135.0
(22) Date de dépôt: 13.05.2005
(51) Int. Cl.: B32B 3/20, B32B 37/14, B29D 24/00

(54) **PROCEDE DE FABRICATION D'UNE STRUCTURE COMPOSITE DU TYPE SANDWICH, ET STRUCTURE COMPOSITE OBTENUE PAR LEDIT PROCEDE.**
VERFAHREN ZUR HERSTELLUNG EINER SANDWICH-VERBUNDSTRUKTUR UND MIT DIESEM VERFAHREN HERGESTELLTE VERBUNDSTRUKTUR
METHOD FOR PRODUCING A SANDWICH-TYPE COMPOSITE STRUCTURE AND A COMPOSITE STRUCTURE PRODUCED BY SAID METHOD

(30) Priorité: 25.05.2004 FR 0405610
(43) Date de publication de la demande: 21.02.2007
(73) Titulaire: Dening, 95300 Pontoise (FR)
(72) Inventeur: LEBUGLE, Denis, F-60240 Delincourt (FR)
(74) Mandataire: Jaunez, Xavier
(86) Numéro de dépôt international: PCT/FR2005/001201
(87) Numéro de publication internationale: WO 2006/000664

(56) Documents cités:
- DE-A- 19 939 513
- GB-A- 899 223
- US-A- 3 440 130

## Description

La présente invention concerne la fabrication de structures composites du type sandwich comportant une âme centrale alvéolaire.

### ARRIERE-PLAN DE L'INVENTION

On utilise de plus en plus des matériaux du type sandwich, du fait de leur intérêt pour un bon compromis entre la rigidité et la masse, et car ils permettent de nombreuses applications. Un domaine de prédilection pour l'utilisation de matériaux composites du type sandwich est actuellement celui des pièces de carrosserie de véhicules, le terme "véhicule" étant pris dans son sens le plus large.

On pourra se référer aux documents FR-A-2 814 425, FR-A-2 779 379, FR-A-2 777 219, FR-A-2 777 218, FR-A-2 768 076, FR-A-2 766 755, et FR-A-2 758 504.

D'une façon générale, les structures composites du type sandwich comportent une âme centrale alvéolaire agencée entre deux peaux de recouvrement. Cependant, leur fabrication reste relativement délicate, car l'assemblage de plusieurs matériaux (peaux de recouvrement et âme centrale) nécessite une grande rigueur dans le processus pour respecter les paramètres géométriques de l'âme centrale. Par suite, cette technique de fabrication reste le plus souvent limitée à la réalisation de panneaux plans, et beaucoup plus rarement d'ensembles tridimensionnels de formes plus complexes.

Pour réaliser l'âme centrale alvéolaire, on utilise la plupart du temps une structure en nid d'abeilles. Outre la complexité de fabrication de tels nids d'abeilles, on rencontre des difficultés parfois insurmontables en cas de déformations profondes. En outre, la calculabilité prévisionnelle des performances et du comportement pendant le processus de réalisation et en utilisation est extrêmement difficile, dans la mesure où il dépend du bon respect de la géométrie et de l'intégrité de l'âme centrale alvéolaire, ainsi que de la qualité et de la possibilité de prédire les propriétés des liaisons entre les différents matériaux. Ceci est rendu encore plus difficile dans le cadre d'utilisation de peaux en tissus croisés ou mâts aléatoires, comme c'est souvent le cas actuellement pour les pièces d'habillage de véhicules automobiles, dont les caractéristiques sont très difficilement prévisibles.

Il en résulte des matériaux performants mais coûteux, et qui sont en fait encore réservés à certaines applications de pointe.

Le document DE-199 39513 A1 décrit une autre variante dans laquelle l'âme centrale est constituée de billes sphériques collées entre elles.

Il convient toutefois de noter certains développements récents mettant en oeuvre des matériaux thermoplastiques tels que le polypropylène renforcé de fibres de verre, ou des nids d'abeilles en carton, qui sont peu coûteux. Cependant, le processus de fabrication reste délicat à maîtriser, et il est très difficile d'envisager des déformations importantes pendant la fabrication pour réaliser des emboutis profonds. Enfin, ces matériaux à bas prix ont des propriétés qui ne sont pas aisément calculables.

Un autre enseignement antérieur est constitué par la réalisation de panneaux ou d'éléments structurels légers à partir de billes creuses en verre qui sont déformées par chaleur et pression en cellules polyhédriques jointives.

Le document GB 899 233 A de 1959 décrit ainsi le principe général de la déformation d'une masse de billes sphériques creuses en verre pour obtenir un ensemble alvéolaire à cellules polyhédriques jointives.

Le US 3 440 130 A illustre également la réalisation d'un panneau alvéolaire translucide conçu pour laisser passer les longueurs d'ondes infrarouges solaires (0,3 à 2 µm), mais pas les longueurs d'ondes infrarouges plus élevées, afin de procurer un "effet de serre" optimal.

Ce document enseigne l'utilisation de couches superposées de billes sphériques jointives, creuses et à parois minces, empilées dans un moule fermé supérieurement par un piston. La chaleur et la pression ont pour effet de déformer les billes sphériques réalisées en verre et d'aboutir à des cellules polyhédriques jointives formant une structure alvéolaire. Il n'est cependant aucunement suggéré de choisir des diamètres différents de billes (on cherche d'ailleurs au contraire à avoir un diamètre uniforme aussi proche que possible d'un demi-pouce, soit 1,27 cm), ni une disposition géométrique particulière de ces billes.

### OBJET DE L'INVENTION

L'invention a pour but de concevoir une technique de fabrication de structures composites du type sandwich ne présentant pas les inconvénients précités, et permettant en particulier à la fois la réalisation d'emboutis profonds, tout en respectant la géométrie de l'âme centrale alvéolaire, et en maîtrisant la reproductibilité et la fiabilité des caractéristiques des liaisons entre constituants, permettant en particulier une modélisation pour le calcul du comportement de l'ensemble.

### DEFINITION GENERALE DE L'INVENTION

Le problème cité est résolu conformément à l'invention grâce à un procédé de fabrication qui est remarquable en ce qu'on réalise tout d'abord une ébauche tridimensionnelle destinée à constituer l'âme centrale de la structure composite, dans une étape préliminaire consistant à :
- disposer une forme rigide, plane ou gauche;
- déposer sur une face supérieure de cette forme rigide une pluralité de billes sphériques creuses jointives, conformément à un choix de diamètres et à une disposition géométrique déterminés par le calcul à partir des caractéristiques géométriques et mécaniques désirées des différentes zones de la structure composite à réaliser, chaque bille de ladite pluralité de billes étant déformable et renfermant intérieurement au moins un agent fonctionnel ;
- assujettir les billes sphériques dans leurs positions respectives pour constituer un ensemble unitaire non rigide et manipulable formant l'ébauche tridimensionnelle ;
et en ce que l'ébauche tridimensionnelle ainsi réalisée est disposée entre deux peaux, et l'ensemble est mis en place dans un moule de pressage à chaud pour obtenir une structure composite dont l'âme centrale alvéolaire est constituée par le résultat de la déformation des billes de ladite ébauche tridimensionnelle.

Conformément à un premier mode d'exécution, le dépôt de billes sphériques est effectué sur un premier film préalablement posé sur la face supérieure de la forme rigide, et l'assujettissement des billes sphériques déposées est effectué en disposant un second film pour recouvrir la couche de billes formée sur le premier film, puis en emprisonnant ladite couche de billes entre le premier et le second films.

Dans ce cas, si l'un au moins des premier et second films est en matière plastique thermorétractable, on pourra prévoir que l'emprisonnement de la couche de billes est effectué en rétractant ledit au moins un film.

En variante, si les premier et second films sont thermosoudables sur les billes, on pourra prévoir que l'emprisonnement de la couche de billes est effectué par thermosoudage desdits films sur certaines au moins desdites billes.

Conformément à encore une autre variante, on pourra prévoir que l'emprisonnement de la couche de billes est effectué par aspiration de l'air contenu entre les premier et second films après fermeture des bords superposés desdits films.

Dans un autre mode d'exécution du procédé, il est prévu qu'un assujettissement au moins partiel des billes sphériques est effectué par liaisonnement des billes entre elles, en particulier par collage ou thermocollage.

Il est par ailleurs intéressant de prévoir que l'ébauche tridimensionnelle terminée est liaisonnée à l'une au moins des deux peaux avant la mise en place de l'ensemble dans le moule de pressage à chaud. En particulier, le liaisonnement de l'ébauche tridimensionnelle avec l'une au moins des deux peaux est effectué par collage et/ou thermocollage ponctuel.

De préférence encore, chacune des billes sphériques utilisées est constituée par une enveloppe creuse d'épaisseur prédéterminée et renfermant l'agent fonctionnel, ladite enveloppe ayant une forme sphérique essentiellement stable à la température ambiante et étant déformable par chauffage.

De préférence alors, l'agent fonctionnel est constitué par un matériau de remplissage ayant des propriété mécaniques, thermiques, électriques, magnétiques, vibratoires, ou acoustiques qui sont adaptées à l'environnement et aux caractéristiques fonctionnelles locales de la structure de composite concernée.

L'invention a également pour objet une structure composite du type sandwich constituant un élément de carrosserie de véhicule, comportant une âme centrale alvéolaire agencée entre deux peaux de recouvrement constituées par des flans découpés réalisés dans des matériaux aptes à former une surface extérieure et une surface intérieure de l'élément de carrosserie, ladite structure étant remarquable en ce qu'elle est obtenue par un procédé présentant l'une au moins des caractéristiques précitées, et en ce que l'âme centrale de ladite structure est formée de cellules creuses juxtaposées contenant chacune un agent fonctionnel, lesdites cellules étant obtenues par déformation des billes sphériques creuses de même volume intérieur respectif.

De préférence, chacune des cellules creuses est constituée par une enveloppe d'épaisseur prédéterminée, et l'agent fonctionnel associé est constitué par un matériau de remplissage ayant des propriétés mécaniques, thermiques, électriques, magnétiques, vibratoires ou acoustiques qui sont adaptées à l'environnement et aux caractéristiques fonctionnelles locales de ladite structure composite. En particulier, certaines des cellules creuses renferment également au moins un composant électronique, par exemple un capteur ou une étiquette HF.

D'autres caractéristiques et avantages de l'invention apparaîtront plus clairement à la lumière de la description qui va suivre et des dessins annexés.

### BREVE DESCRIPTION DES DESSINS

Il sera fait référence aux figures du dessin annexé où :
- la figure 1 illustre schématiquement les différentes étapes successives d'un procédé conforme à l'invention permettant de réaliser une structure composite constituant en l'espèce un élément de carrosserie de véhicule ;
- la figure 2 illustre une variante du procédé précité, dans lequel l'emprisonnement de la couche de billes visant à réaliser un ensemble unitaire non rigide et manipulable formant l'ébauche tridimensionnelle, est réalisé en emprisonnant les billes entre deux films.

### DESCRIPTION DETAILLEE DU MODE DE REALISATION PREFERE

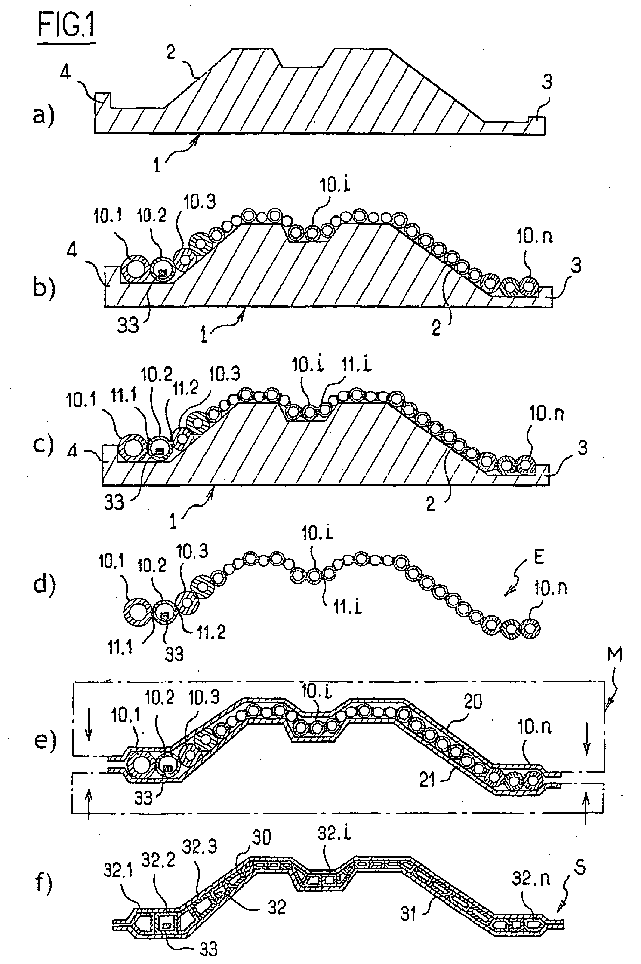

La figure 1 illustre schématiquement des étapes successives mettant en oeuvre un procédé de fabrication d'une structure composite du type sandwich conforme à l'invention, constituant par exemple un élément de carrosserie de véhicule.

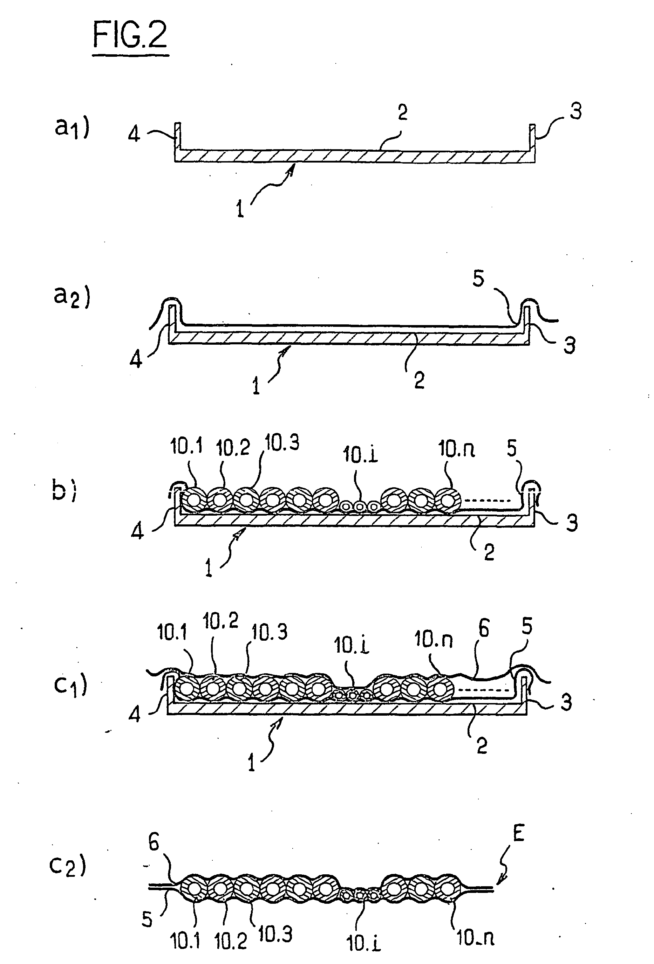

En a), on distingue une forme rigide 1, qui est ici gauche. Cette forme rigide comprend une face supérieure 2, et des rebords périphériques notés 3 et 4. La géométrie de la face supérieure 2, qui est ici complexe, sera généralement en correspondance avec la géométrie générale de la structure composite à réaliser. Cependant, comme on le verra en se référant à la figure 2, on peut parfaitement utiliser une forme rigide qui est plane, et ce même pour réaliser des structures composites de formes gauches et complexes.

En b), on dépose sur la face supérieure 2 de cette forme rigide 1 une pluralité de billes sphériques creuses jointives notées 10.1, 10.2, 10.3,...,10.i,...10.n. Le dépôt de cette pluralité de billes sphériques creuses s'effectue, manuellement ou de préférence automatiquement par une machine non représentée ici, conformément à un choix de diamètres et à une disposition géométrique qui sont déterminés par le calcul à partir des caractéristiques géométriques et mécaniques désirées des différentes zones de la structure composite à réaliser.

Comme cela a été illustré ici, les différentes billes sphériques ont des diamètres extérieurs différents, mais aussi des épaisseurs différentes. Chaque bille de ladite pluralité de billes est déformable, et renferme intérieurement au moins un agent fonctionnel.

Chaque bille est ainsi réalisée à partir d'un ou plusieurs matériaux tels que la forme sphérique de la bille soit essentiellement stable à la température ambiante, tout en étant déformable par chauffage. L'enveloppe creuse de chaque bille a ainsi une épaisseur prédéterminée, et peut être réalisée en une ou plusieurs couches. Plus précisément, l'enveloppe creuse de chaque bille sphérique doit pouvoir se déformer sous l'action de forces exercées par un outillage, directement ou par l'intermédiaire d'autres éléments, par exemple d'autres billes ou les peaux de la structure sandwich, et par le matériau de remplissage associé. Ces enveloppes pourront être constituées en particulier de matériaux de synthèse thermoplastiques ou thermodurcissables, chargés ou non, ou encore de matériaux métalliques.

Ainsi, que cela a été dit plus haut, chaque enveloppe a une forme sphérique qui est quasi stable à température ambiante, et sa déformabilité sous l'action de forces extérieures pourra être augmentée par ramollissement, ou par toute autre modification de ses caractéristiques mécaniques provoquées par un chauffage par apport thermique direct (four, soufflage d'air chaud, lampe à rayonnement par exemple), par micro-ondes (en ayant laissé dans la bille un taux d'humidité contrôlé), par induction (en ayant inclus dans le matériau de l'enveloppe une poudre métallique), ou encore par effet Joule (en ayant inclus suffisamment de poudre métallique dans le matériau de l'enveloppe pour rendre celle-ci conductrice).

L'enveloppe des billes sphériques assure plusieurs fonctions : après déformation ultérieure, comme cela sera décrit plus loin, chaque bille sphérique est destinée à constituer une cellule de base de l'âme centrale alvéolaire de la structure composite sandwich. La bille sert également de contenant pour le matériau de remplissage ou pour tout autre moyen fonctionnel qui est intégré à l'intérieur de la bille lors de la fabrication de celle-ci : on a en particulier illustré ici la présence d'un composant noté 33 qui peut être un composant électronique, en particulier un capteur ou une étiquette HF.

L'agent fonctionnel contenu à l'intérieur de chacune des billes sera en général constitué par un matériau de remplissage ayant des propriétés mécaniques, thermiques, électriques, magnétiques, vibratoires, ou acoustiques qui sont adaptées à l'environnement et aux caractéristiques fonctionnelles locales de la structure composite concernée.

Le matériau de remplissage occupant l'espace intérieur des billes sphériques creuses est destiné à assurer lui aussi plusieurs fonctions, lesquelles sont variables en fonction de l'implantation de la bille destinée à devenir une cellule dans l'âme centrale alvéolée. Le matériau de remplissage doit pouvoir ainsi transmettre à la paroi intérieure de l'enveloppe la pression hydrostatique créée par l'application d'une force interne ou externe sur l'enveloppe, et/ou être capable d'exercer un effort d'expansion sur la paroi intérieure de l'enveloppe. Ce matériau de remplissage peut être selon le cas un élément de régulation thermique pour éviter que l'enveloppe ne fonde pendant l'opération de ramollissement de l'enveloppe. Enfin le matériau de remplissage peut conférer des propriétés spécifiques localisées, en particulier acoustiques, par sa masse propre ou grâce à une masse localisée qu'il entourerait, ou encore informatives en emprisonnant un capteur, un composant électronique ou une étiquette HF comme cela a été dit plus haut.

Le matériau de remplissage peut être également destiné à conduire la chaleur, la lumière, l'électricité, ou le champ magnétique.

D'une façon générale, le dimensionnement de chacune des billes sphériques creuses résultera d'une série de calculs, le plus souvent réalisés au moyen d'un ordinateur, qui sont inclus dans le processus de conception de la pièce terminée.

Les billes sphériques creuses pourront être fabriquées en mettant en oeuvre des techniques, d'extrusion, d'extrusion-soufflage, ou d'injection.

On pourra également partir de granulés, par exemple de polypropylène expansible, refroidi à coeur, ces granulés étant comprimés dans un moule à surface chaude pour faire fondre le polypropylène en surface et ainsi constituer une peau, après refroidissement rapide, sans pour cela provoquer l'expansion du coeur. Lors de la fabrication de la structure sandwich, l'apport calorifique provoque alors à la fois le ramollissement de la peau de surface des billes et l'expansion du coeur.

En c), en a illustré une étape d'assujettissement des billes sphériques dans leurs positions respectives pour constituer un ensemble unitaire. En l'espèce, cet assujettissement au moins partiel des billes sphériques est effectué par liaisonnement des billes entre elles. On a noté 11.1, 11.2,... 11.i,... des zones de liaisonnement entre billes adjacentes, ce liaisonnement pouvant être réalisé en particulier par collage ou thermocollage grâce à un adhésif prévu à la surface extérieure des billes creuses, ou à la nature même du matériau constitutif de l'enveloppe extérieure desdites billes.

Une fois cette étape terminée, on dispose alors d'un ensemble unitaire non rigide et manipulable, qui constitue une ébauche tridimensionnelle notée E et qui est illustrée en d).

Ensuite, comme illustré en e), l'ébauche tridimensionnelle E ainsi réalisée est disposée entre deux peaux 20, 21, et l'ensemble est mis en place dans un moule de pressage à chaud M.

On pourra bien entendu prévoir une étape supplémentaire avant la mise en place dans le moule de pressage à chaud M, qui serait une liaison au moins partielle assurée entre l'ébauche tridimensionnelle E et l'une au moins des peaux 20, 21. Ceci peut s'effectuer par un chauffage localisé de certaines zones de l'ébauche tridimensionnelle E. Un tel liaisonnement préliminaire évite alors tout risque de déplacement intempestif de l'ébauche tridimensionnelle par rapport à ses peaux, et permet ainsi d'assurer un positionnement relatif parfait entre les deux peaux 20, 21 et l'ébauche tridimensionnelle E.

Lors du passage dans le moule de pressage à chaud M, les billes sphériques creuses constituant l'ébauche tridimensionnelle E se déforment de façon à occuper l'espace disponible tout en gardant le même volume intérieur. Ceci aboutit à des cellules, en général de forme cylindrique ou hexagonale, qui sont juxtaposées par leurs faces de contact. On a ainsi illustré en f) une structure composite notée S obtenue à l'issue du passage dans le moule de pressage à chaud M, l'âme centrale alvéolaire notée 32 de cette structure composite étant constituée par le résultat de la déformation des billes de l'ébauche tridimensionnelle E. En f), on a noté 30 et 31 les deux peaux enveloppant l'âme centrale alvéolaire 32, ceci pour illustrer le fait que ces deux peaux peuvent être également le résultat de transformation des peaux 20, 21 lors du passage dans le moule de pressage à chaud M. Ce n'est bien sûr pas le cas lorsque l'une de ces peaux est constituée par une tôle métallique.

En particulier, lorsqu'il s'agit de réaliser une structure composite constituant un élément de carrosserie de véhicule, les peaux 30, 31 recouvrant l'âme centrale alvéolaire 32 pourront être des flancs prédécoupés, éventuellement préchauffés et/ou préencollés, réalisés dans des matériaux aptes à former une surface extérieure et une surface intérieure, éventuellement habillée, de l'élément de carrosserie.

On notera que la bille sphérique creuse 10.2 contenant ici un composant électronique 33 est devenue une cellule 32.2 qui contient toujours le même composant électronique 33.

Pour faciliter la compréhension, on a noté 32.1, 32.2, 32.3,... 32.i,... 32.n les cellules formant l'âme centrale alvéolaire 32 et qui résultent respectivement de la déformation, lors du passage dans le moule de pressage à chaud M, des billes sphériques creuses précitées 10.1, 10.2, 10.3,... 10.i,... 10.n.

Sur la figure 2, on a illustré une variante dans laquelle, tout d'abord, la forme rigide 1 a une face supérieure 2 qui est plane comme illustré en a₁₎.

La figure 2 illustre également une variante du mode d'assujettissement des billes sphériques dans leurs positions respectives.

En effet, pour cela, on dépose préalablement un premier film 5 sur la face supérieure 2 de la forme rigide 1, comme illustré en a₂₎. Ensuite, on a schématisé une étape b) dans laquelle on procède au dépôt de l'ensemble prévu de billes sphériques 10.1, 10.2, 10.3,... 10.i,... 10.n sur la face supérieure du premier film 5. Après le dépôt de cette couche de billes sphériques, on dispose un second film 6 pour recouvrir la couche de billes ainsi formée, comme illustré en c₁₎.

L'assujettissement des billes sphériques est alors effectué par un emprisonnement entre les deux films minces 5 et 6.

Si l'un au moins des films 5 et 6 est en matière plastique thermorétractable, l'emprisonnement de la couche de billes est effectué en rétractant ce film thermorétractable. En variante, avec des films 5 et 6 qui sont thermosoudables sur les billes, l'emprisonnement de la couche de billes est effectué par thermosoudage de ces films sur certaines au moins des billes.

Conformément à une autre variante, on pourra prévoir que l'emprisonnement de la couche de billes est effectué par aspiration de l'air contenu entre les premier et second films 5, 6 après fermeture, par exemple par thermosoudage, des bords superposés desdits films.

Quel que soit le mode d'assujettissement retenu, on aboutit à une ébauche tridimensionnelle E telle qu'illustrée en c₂₎, comportant une couche de billes correctement positionnées qui est maintenue par les deux films de recouvrement 5, 6, et l'on dispose comme précédemment d'un ensemble unitaire non rigide et manipulable. C'est cette ébauche tridimensionnelle E qui est ensuite disposée entre deux peaux, avant la mise en place dans le moule de pressage à chaud M, comme précédemment décrit en référence à la figure 1.

Dans tous les cas, les cellules obtenues par déformation des billes sphériques creuses ont le même volume intérieur respectif que lesdites billes.

On comprend dès lors qu'il suffit de déterminer, à partir des caractéristiques géométriques et mécaniques de la pièce finie à réaliser, la position et la taille de chacune des cellules constituant l'âme centrale alvéolaire. Pour chacune de ces cellules, le volume intérieur doit être le même que le volume intérieur de la sphère correspondante servant d'élément de départ, puisque c'est le volume de remplissage qui transmettra la pression hydrostatique. Ce volume connu permet alors de calculer le rayon intérieur de la sphère de départ. Pour chacune des cellules, la surface extérieure, qui adhère aux cellules adjacentes, doit être la même que la surface extérieure de la sphère extérieure de départ. Cette surface connue permet donc de calculer le rayon extérieur de la sphère de départ. La différence entre les deux rayons ainsi déterminés permet de calculer l'épaisseur de la sphère de départ.

Ainsi, par un processus qui s'apparente à des processus de calcul par éléments finis, on détermine à l'avance la distribution particulière et le dimensionnement des billes sphériques creuses pour chaque zone déterminée de la structure composite à réaliser. On comprend dès lors que la technique de l'invention permet d'aboutir à une structure dont le comportement peut être parfaitement déterminé à l'avance, en fonction en particulier de l'implantation de la structure composite concernée.

La déformation de billes sphériques de comportement connu et caractérisé, et topologiquement prévisible, ainsi que la continuité du matériau de contact, permettent de réaliser aisément des pièces fortement déformées, à forte résistance, à propriétés locales adaptées, et au comportement déterminable avec précision par le calcul.

L'invention n'est pas limitée aux modes de réalisation qui viennent d'être décrits, mais englobe au contraire toute variante reprenant, avec des moyens équivalents, les caractéristiques essentielles énoncées plus haut..

En particulier, l'invention s'applique à la réalisation de structures composites du type sandwich utilisables dans de nombreux domaines techniques pour réaliser des panneaux plans ou gauches, le domaine des transports (véhicules automobiles, véhicules ferroviaires, aéronefs, conteneurs, etc...) restant cependant un domaine particulièrement intéressant pour la mise en oeuvre de l'invention.

Enfin, bien que l'on ait décrit un processus de fabrication d'ébauches de type discret, c'est-à-dire ébauche par ébauche, on pourra envisager une fabrication de type continu, permettant de réaliser des panneaux, plans ou profilés, de grandes longueurs.

## Revendications

1. Procédé de fabrication d'une structure composite du type sandwich comportant une âme centrale alvéolaire, dans lequel on réalise tout d'abord une ébauche tridimensionnelle (E) destinée à constituer l'âme centrale de la structure composite, dans une étape préliminaire consistant à :
- disposer une forme rigide (1), plane ou gauche;
- déposer sur une face supérieure (2) de cette forme rigide (1) une pluralité de billes sphériques creuses jointives (10.1, 10.2,... 10.i...), conformément à un choix de diamètres et à une disposition géométrique déterminés par le calcul à partir des caractéristiques géométriques et mécaniques désirées des différentes zones de la structure composite à réaliser, chaque bille (10.1, 10.2,... 10.i...) de ladite pluralité de billes étant déformable et renfermant intérieurement au moins un agent fonctionnel ;
- assujettir les billes sphériques (10.1, 10.2,... 10.i...) dans leurs positions respectives pour constituer un ensemble unitaire non rigide et manipulable formant l'ébauche tridimensionnelle (E) ;
et dans lequel l'ébauche tridimensionnelle (E) ainsi réalisée est disposée entre deux peaux (20, 21), et l'ensemble est mis en place dans un moule de pressage à chaud (M) pour obtenir une structure composite (S) dont l'âme centrale alvéolaire (32) est constituée par le résultat de la déformation des billes de ladite ébauche tridimensionnelle.

2. Procédé selon la revendication 1, **caractérisé en ce que** le dépôt de billes sphériques (10.1, 10.2,... 10.i...) est effectué sur un premier film (5) préalablement posé sur la face supérieure (2) de la forme rigide (1), et l'assujettissement des billes sphériques déposées est effectué en disposant un second film (6) pour recouvrir la couche de billes formée sur le premier film (5), puis en emprisonnant ladite couche de billes entre le premier et le second films (5, 6).

3. Procédé selon la revendication 2, dans lequel l'un au moins des premier et second films (5, 6) est en matière plastique thermorétractable, **caractérisé en ce que** l'emprisonnement de la couche de billes (10.1, 10.2,... 10.i...) est effectué en rétractant ledit au moins un film.

4. Procédé selon la revendication 2, dans lequel les premiers et second films (5, 6) sont thermosoudables sur les billes (10.1, 10.2,... 10.i...), **caractérisé en ce que** l'emprisonnement de la couche de billes est effectué par thermosoudage desdits films sur certaines au moins desdites billes.

5. Procédé selon la revendication 2, **caractérisé en ce que** l'emprisonnement de la couche de billes (10.1, 10.2,... 10.i...) est effectué par aspiration de l'air contenu entre les premier et second films (5, 6) après fermeture des bords superposés desdits films.

6. Procédé selon la revendication 1, **caractérisé en ce qu'**un assujettissement au moins partiel des billes sphériques (10.1, 10.2,... 10.i...) est effectué par liaisonnement (11.1, 11.2,... 11.i...) des billes entre elles, en particulier par collage ou thermocollage.

7. Procédé selon l'une quelconque des revendications 1 à 6, **caractérisé en ce que** l'ébauche tridimensionnelle (E) terminée est liaisonnée à l'une au moins des deux peaux (20, 21) avant la mise en place de l'ensemble dans le moule de pressage à chaud (M).

8. Procédé selon la revendication 7, **caractérisé en ce que** le liaisonnement de l'ébauche tridimensionnelle (E) avec l'une au moins des deux peaux (20, 21) est effectué par collage et/ou thermocollage ponctuel.

9. Procédé selon l'une quelconque des revendications 1 à 8, dans lequel chacune des billes sphériques utilisées (10.1, 10.2,... 10.i...) est constituée par une enveloppe creuse d'épaisseur prédéterminée et renfermant l'agent fonctionnel, ladite enveloppe ayant une forme sphérique essentiellement stable à la température ambiante et étant déformable par chauffage.

10. Procédé selon la revendication 9, dans lequel l'agent fonctionnel est constitué par un matériau de remplissage ayant des propriétés mécaniques, thermiques, électriques, magnétiques, vibratoires, ou acoustiques qui sont adaptées à l'environnement et aux caractéristiques fonctionnelles locales de la structure composite (S) concernée.

11. Structure composite (S) du type sandwich, constituant un élément de carrosserie de véhicule, comportant une âme centrale alvéolaire (32) agencée entre deux peaux de recouvrement (30, 31) constituées par des flans découpés réalisés dans des matériaux aptes à former une surface extérieure et une surface intérieure de l'élément de carrosserie, **caractérisée en ce qu'**elle est obtenue par un procédé selon l'une au moins des revendications précédentes, et **en ce que** l'âme centrale (32) de ladite structure est formée de cellules creuses juxtaposées (32.1, 32.2, ... 32.i...) contenant chacune un agent fonctionnel, lesdites cellules étant obtenues par déformation des billes sphériques creuses de même volume intérieur respectif.

12. Structure composite (S) selon la revendication 11, **caractérisée en ce que** chacune des cellules creuses (32.1, 32.2,... 32.i...) est constituée par une enveloppe d'épaisseur prédéterminée, et l'agent fonctionnel associé est constitué par un matériau de remplissage ayant des propriétés mécaniques, thermiques, électriques, magnétiques, vibratoires ou acoustiques qui sont adaptées à l'environnement et aux caractéristiques fonctionnelles locales de ladite structure composite.

13. Structure composite (S) selon la revendication 12, **caractérisée en ce que** certaines des cellules creuses (32.1, 32.2,... 32.i...) renferment également au moins un composant électronique (33), en particulier un capteur ou une étiquette HF.

## Claims

1. A method of fabricating a sandwich-type composite structure including a cellular central core, in which firstly a three-dimensional blank (E) is made in order to constitute the central core of the composite structure, in a preliminary step consisting in:
· providing a rigid shape (1) that is plane or warped;
· placing on a top face (2) of said rigid shape (1), a plurality of touching hollow spherical beads (10.1, 10.2, ..., 10.i, ...), complying with a diameter selection and a geometrical disposition that are determined by calculation on the basis of geometrical and mechanical characteristics desired for various zones of the composite structure to be made, each bead 10.1, 10.2, ..., 10.i, ...) of said plurality of beads being deformable and containing internally at least one functional agent; and
· securing the spherical beads (10.1, 10.2, ..., 10.i, ...) in their respective positions in order to constitute a unitary assembly that is not rigid and that can be manipulated, thereby forming the three-dimensional blank (E);
and in which the three-dimensional blank (E) as made in this way is placed between two skins (20, 21), and the assembly is placed in a hot-press mold (M) to obtain a composite structure (S) having its cellular central core (32) constituted by the result of deforming the beads of said three-dimensional blank.

2. A method according to claim 1, **characterized in that** the spherical beads (10.1, 10.2, ..., 10.i, ...) are deposited on a first film (5) previously placed on the top face (2) of the rigid shape (1), and the deposited spherical beads are secured by placing a second film (6) to cover the layer of beads formed on the first film (5) and then imprisoning said layer of beads between the first and second films (5, 6).

3. A method according to claim 2, in which at least one of the first and second films (5, 6) is of heat-shrink plastics material, the method being **characterized in that** the layer of beads (10.1, 10.2, ..., 10.i, ...) is imprisoned by shrinking said at least one film.

4. A method according to claim 2, in which the first and second films (5, 6) are heat-sealable on the beads (10.1, 10.2, ..., 10.i, ...), the method being **characterized in that** the layer of beads is imprisoned by heat-sealing said films on at least some of said beads.

5. A method according to claim 2, **characterized in that** the layer of beads (10.1, 10.2, ..., 10.i, ...) is imprisoned by sucking out the air contained between the first and second films (5, 6) after closing together the superposed edges of said films.

6. A method according to claim 1, **characterized in that** the spherical beads (10.1, 10.2, ..., 10.i, ...) are secured at least partially by connecting (11.1, 11.2, ..., 11.i, ...) the beads to one another, in particular by adhesive or by thermofusing.

7. A method according to any one of claims 1 to 6, **characterized in that** the finished three-dimensional blank (E) is connected to at least one of the two skins (20, 21) before putting the assembly into place in the hot-press mold (M).

8. A method according to claim 7, **characterized in that** the three-dimensional blank (E) is connected to at least one of the two skins (20, 21) by spot thermofusing and/or adhesive.

9. A method according to any one of claims 1 to 8, in which each of the spherical beads used (10.1, 10.2, ..., 10.i, ...) is constituted by a hollow envelope of predetermined thickness containing the functional agent, said envelope having a spherical shape that is essentially stable at ambient temperature and being deformable by heating.

10. A method according to claim 9, in which the functional agent is constituted by a filler material having mechanical, thermal, electrical, magnetic, vibratory, or acoustic properties that are adapted to the environment and to the local functional characteristics of said composite structure (S) in question.

11. A sandwich-type composite structure (S) constituting a vehicle bodywork element, comprising a cellular central core (32) arranged between two covering skins (30, 31) constituted by cutout blanks made of material suitable for forming an outside surface and an inside surface of bodywork, the structure being **characterized in that** it is obtained by a method according to at least one of the preceding claims, and **in that** the central core (20) of said structure is made up of juxtaposed hollow cells (32.1, 32.2, ..., 32.i, ...) each containing a functional agent, said cells being obtained by deforming hollow spherical beads all having the same inside volume.

12. A composite structure (S) according to claim 11, **characterized in that** each of the hollow cells (32.1, 32.2, ..., 32.i, ...) is constituted by an envelope of predetermined thickness, and the association functional element is constituted by a filler material having mechanical, thermal, electrical, magnetic, vibratory, or acoustic properties that are adapted to the environment and to the local functional characteristics of said composite structure.

13. A composite structure (S) according to claim 12, **characterized in that** some of the cells (32.1, 32.2, ..., 32.i, ...) also contain at least one electronic component (33), in particular an HF label or a sensor.

## Patentansprüche

1. Verfahren zur Herstellung einer Sandwichverbundstruktur, die einen alveolaren zentralen Kern umfasst, bei dem zuerst ein dreidimensionaler Rohling (E), der dazu bestimmt ist, den zentralen Kern der Verbundstruktur zu bilden, in einem vorbereitenden Schritt erzeugt wird, der besteht im:
- Anordnen einer starren Form (1), eben oder uneben,
- Aufbringen einer Vielzahl von aneinander gesetzten, hohlen Kugeln (10.1, 10.2, ..., 10.i...) auf eine obere Fläche (2) dieser starren Form (1), entsprechend einer Auswahl von Durchmessern und einer geometrischen Anordnung, die durch Berechnung ausgehend von gewünschten geometrischen und mechanischen Eigenschaften unterschiedlicher Zonen der herzustellenden Verbundstruktur bestimmt werden, wobei jede Kugel (10.1, 10.2, ..., 10.i...) der genannten Vielzahl von Kugeln verformbar ist und im Inneren mindestens einen funktionellen Wirkstoff einschließt,
- Fixieren der Kugeln (10.1, 10.2, ..., 10.i...) in ihren jeweiligen Positionen, um eine unitäre, nicht starre und handhabbare Einheit aufzubauen, die den dreidimensionalen Rohling (E) bildet,
und bei dem der so hergestellte dreidimensionale Rohling (E) zwischen zwei Außenschichten (20, 21) angeordnet wird, und die Einheit in einer Heißpressform (M) angeordnet wird, damit man eine Verbundstruktur (S) erhält, deren alveolarer zentraler Kern (32) als Folge der Verformung der Kugeln des genannten dreidimensionalen Rohlings gebildet wird.

2. Verfahren nach Anspruch 1, **dadurch gekennzeichnet, dass** das Aufbringen der Kugeln (10.1, 10.2, ..., 10.i...) auf einer ersten Folie (5) erfolgt, die zuvor auf die obere Fläche (2) der starren Form (1) gelegt wurde, und das Fixieren der aufgebrachten Kugeln dadurch erfolgt, dass man eine zweite Folie (6) so anordnet, dass sie die auf der ersten Folie (5) gebildete Schicht aus Kugeln abdeckt, und man dann die genannte Kugelschicht zwischen der ersten Folie (5) und der zweiten Folie (6) einschließt.

3. Verfahren nach Anspruch 2, bei dem mindestens die erste Folie (5) oder die zweite Folie (6) aus einem wärmeschrumpfbaren Kunststoffmaterial besteht, **dadurch gekennzeichnet, dass** das Einschließen der Kugelschicht (10.1, 10.2, ..., 10.i...) dadurch erfolgt, dass die genannte mindestens eine Folie geschrumpft wird.

4. Verfahren nach Anspruch 2, bei dem die erste Folie (5) und die zweite Folie (6) mit den Kugeln (10.1, 10.2, ..., 10.i...) warmverschweißt werden können, **dadurch gekennzeichnet, dass** das Einschließen der Kugelschicht durch Warmverschweißen der genannten Folien mit wenigstens einigen der genannten Kugeln erfolgt.

5. Verfahren nach Anspruch 2, **dadurch gekennzeichnet, dass** das Einschließen der Kugelschicht (10.1, 10.2, ..., 10.i...) durch Absaugen der zwischen der ersten Folie (5) und der zweiten Folie (6) enthaltenen Luft erfolgt, nachdem die übereinander angeordneten Ränder der genannten Folien verschlossen wurden.

6. Verfahren nach Anspruch 1, **dadurch gekennzeichnet, dass** ein Fixieren mindestens eines Teils der Kugeln (10.1, 10.2, ..., 10.i...) durch Verbindung (11.1, 11.2, ..., 11.i...) der Kugeln miteinander erfolgt, insbesondere durch Kleben oder Heißkleben.

7. Verfahren nach einem der Ansprüche 1 bis 6, **dadurch gekennzeichnet, dass** der fertige dreidimensionale Rohling (E) mit mindestens einer der zwei Außenschichten (20, 21) verbunden wird, ehe die Einheit in der Heißpressform (M) angeordnet wird.

8. Verfahren nach Anspruch 7, **dadurch gekennzeichnet, dass** die Verbindung des dreidimensionalen Rohlings (E) mit mindestens einer der zwei Außenschichten (20, 21) durch Punktkleben und/oder punktuelles Heißkleben erfolgt.

9. Verfahren nach einem der Ansprüche 1 bis 8, bei dem jede der verwendeten Kugeln (10.1, 10.2, ..., 10.i...) aus einer hohlen Umhüllung vorgegebener Stärke gebildet ist, die den funktionellen Wirkstoff einschließt, wobei die Umhüllung eine kugelförmige Form hat, die gegenüber der Umgebungstemperatur im Wesentlichen stabil und warmverformbar ist.

10. Verfahren nach Anspruch 9, bei dem der funktionelle Wirkstoff aus einem Füllmaterial gebildet ist, das mechanische, thermische, elektrische, magnetische, vibratorische oder akustische Eigenschaften aufweist, die an die Umgebung und die lokalen funktionellen Eigenschaften der betreffenden Verbundstruktur (S) angepasst sind.

11. Sachwichverbundstruktur (S), die ein Element einer Fahrzeugkarosserie bildet, umfassend einen alveolaren zentralen Kern (32), der zwischen zwei Abdeckschichten (30, 31) angeordnet ist, die von Zuschnitten gebildet sind, die aus Materialien hergestellt sind, welche sich dazu eignen, einen Außenfläche und eine Innenfläche des Karosserieelements zu bilden, **dadurch gekennzeichnet, dass** sie durch ein Verfahren nach mindestens einem der vorhergehenden Ansprüche hergestellt wird, und dass der zentrale Kern (32) der genannten Struktur aus nebeneinander angeordneten, hohlen Zellen (32.1, 32.2, ..., 32.i...) gebildet ist, die jeweils einen funktionellen Wirkstoff enthalten, wobei die genannten Zellen durch Verformung von hohlen Kugeln mit jeweils gleichem Innenvolumen erhalten werden.

12. Verbundstruktur (S) nach Anspruch 11, **dadurch gekennzeichnet, dass** jede der hohlen Zellen (32.1, 32.2, ..., 32.i...) aus einer Umhüllung vorgegebener Stärke gebildet ist, und der dazugehörige funktionelle Wirkstoff aus einem Füllmaterial gebildet ist, das mechanische, thermische, elektrische, magnetische, vibratorische oder akustische Eigenschaften aufweist, die an die Umgebung und an lokale funktionelle Eigenschaften der genannten Verbundstruktur angepasst sind.

13. Verbundstruktur (S) nach Anspruch 12, **dadurch gekennzeichnet, dass** einige der hohlen Zellen (32.1, 32.2, ..., 32.i...) ebenfalls mindestens eine elektronische Komponente (33) umschließen, insbesondere einen Sensor oder ein HF-Etikett.
